# EUROPEAN PATENT SPECIFICATION

(11) **EP 0 252 046 B1**
(45) Date of publication and mention of the grant of the patent: **13.01.1993**
(21) Application number: 87850197.2
(22) Date of filing: 16.06.1987
(51) Int. Cl.: C04B 41/87, C04B 35/80, C04B 35/84

(54) **Coated ceramic sintered whisker reinforced body**
Beschichteter, gesinterter, mit Whiskern verstärkter Keramikkörper
Corps fritté et enrobé en céramique renforcé par whiskers

(30) Priority: 19.06.1986 SE 8602750
(43) Date of publication of application: 07.01.1988
(73) Proprietor: SANDVIK AKTIEBOLAG, 811 81 Sandviken (SE)
(72) Inventor: Engström, Rolf Hakan, S-161 53 Bromma (SE)
(74) Representative: Östlund, Alf Olof Anders

(56) References cited:
- EP-A- 0 095 131
- EP-A- 0 113 660
- EP-A- 0 247 630
- GB-A- 2 157 282
- US-A- 4 336 305
- WORLD PATENTS INDEX LATEST, database, Derwent Pub. Ltd, London, GB; Accession no. 82-87266e, week 41 .

## Description

The present invention relates to whisker reinforced ceramics, based upon pure oxide ceramics or mixed ceramics, which has obtained an improved performance by coating with one or more dense wear resistant surface layers with a total thickness of up to 20 µm.

Much progress lately within the materials technology field has now made it possible to produce ceramics having considerably improved properties particularly the mechanical properties. This fact in combination with generally good properties such as temperature durability, corrosion and erosion resistance and a low weight, results in that ceramics have also become more and more interesting for new applications such as motor components, heat exchangers, cutting inserts, ball bearings and shears. Other important fields for advanced ceramics are for instance bio-materials. The potential of the ceramics as high performing materials is considered to be great. The generally excellent physical properties of ceramics lead to possibilities of meeting the increasing demands upon the materials within for example the mechanical-, space-, offshore - electrical- and bio-industries. Besides the possibilities of meeting the increasing demands upon the materials within new fields the introduction of ceramics can also mean a suitable substitute for materials in existing constructions.

The fields which in the long run will preferably be able to utilize the special properties of the ceramics are high temperature applications such as combustion engines. In this case there are for example great energy gains to be obtained by the possibilities of higher working temperatures and related higher efficiency. Other important factors for the utility of ceramic components are the possibilities of a lower weight.

The wear resistance and corrosion resistance of the ceramics are used in applications being more immediate. In particular the use as cutting tools for machining can be mentioned being already a well established product. Furthermore, ceramic materials as Al₂O₃ and SiC have already an important function as gaskets, packings etc for pumps etc. in a strongly corrosive environment.

Great efforts have been made to improve the mechanical properties and laboratory- and pilot scale tests have given very promising results. For many materials strength levels >800 MPa have been shown. The compressive strength of the ceramics is generally very high.

Ceramics show a high theoretical strength which can be calculated from the binding energy of the atoms. Difficulties for a more general use of ceramic construction materials are the brittleness of the materials which leads to a great sensibility to overloads and thermal chocks as well as tendencies to scattering regarding strength data. Some ways of meeting the brittleness of the ceramics and connected low fracture toughness are the use of so called strengthening mechanisms (tension induced phase transformation, microcracks strengthening and deviation strengthening) and fibre strengthening (ceramic fibres or whiskers in a ceramic matrix). The level of the fracture strength of these materials is close to that of cemented carbide or brittle steel, i.e. 10-20 MPa m½. The ceramic materials being of the greatest interest are based upon Al₂O₃, ZrO₂, Si₃N₄ and SiC.

Another problem today is the poor reproducibility. This relates to the brittleness and low fracture toughness of the ceramics which leads to that the maximally admitted size of defects (microcracks, pores, great grains or crystals) must be only 10-20 µm compared to >100 µm for metals. This results in that great demands are made on the purity of the raw material and on the absence of foreign particles as well as on the process steps.

Also the working of ceramic sintered bodies causes easily surface defects which may be strength determining. Because of their brittleness the ceramics are generally "non-forgiving" to their nature, i.e. one single defect (the weakest link) causes fracture.

As mentioned, the fracture toughness of ceramic cutting materials is of vital importance. Conventional ceramic materials have generally a relatively low fracture toughness with the exception of materials in which a strengthening mechanism is used for example Al₂O₃ - ZrO₂ and partially stabilized ZrO₂, i.e. ZrO₂ where the tetragonal modification is present as metastable in a densely sintered ceramic body by additions of small amounts of Y₂O₃, MgO and/or CaO. Monolithic materials such as SiC and Al₂O₃ have, on the contrary, very low fracture toughness of 3-5 MPa m½ and a strength level of 200-700 MPa.

It is well known that the mechanical properties of ceramic materials can be improved by mixing with fibres, plates or whiskers. Whiskers mean very thin hair crystals, <10 µm of diameter, usually <1 µm of diameter, and having a length to diameter ratio >10 µm, usually >20 µm, and being mono-crystals. The fibre materials are always polycrystalline and have generally diameters >10 µm. Plate or disc shaped particles in ceramic composite materials have similar advantages as the whiskers in the case they are single crystals. It has for example been described in the literature that thin whiskers of SiC or Si₃N₄ have a very favourable effect such as not only a doubled fracture toughness but also a much better fracture strength (>800 MPa) and a more than doubled reliability at a sufficient amount of whiskers.

Known whisker materials include mullite, BN, ZnO, TiO₂, AlN, SiC, Al₂O₃, MgO, Si₃N₄, ZrO₂ and Cr₂O₃ in ceramic matrices of BN, SiO₂, AlN, ZrC, MgO, TiO₂, ZrO₂, Al₂O₃, Cr₂O₃, B₄C, SiC, Y₂O₃, Si₃N₄ or TiN with or without binderphase of e.g. cobalt or nickel. Also the use of plate- or disc shaped single crystals is known and similar improvement in properties as with the needleshaped monocrystals is obtained. Known in the art are alumina or zirconia reinforced with platelike monocrystals of the hexagonal compounds Al₂O₃ and Cr₂O₃.

Said progress has opened the possibilities for many applications in which mechanical performance has been a limiting factor and the many advantages in ceramic matrices such as Al₂O₃ have not been possible to utilize. Such an important application is the use of ceramic cutting inserts for chipforming machining such as turning, milling, drilling etc. Also in high temperature applications, for example in combustion engines or gas turbines, the improved performance has opened new possibilities.

High performance ceramics of interest in these connections is the group of oxide ceramics consisting of one or more oxides sintered to a ceramic body of high density. Examples of such oxide materials are Al₂O₃, ZrO₂ etc. Also mixed ceramics, meaning an oxide or oxide mixture combined with one or more carbides, nitrides or borides and possibly a metallic binder phase, is of interest. Furthermore, monolithic non-oxide based ceramics are of interest because they are mostly brittle such as SiC- or B₄C-based ceramics.

It has been found, however, that whisker reinforced materials have shown unexpected negative properties in several of the mentioned applications. Thus, SiC whiskers in the surface zone of a SiC whisker reinforced Al₂O₃ ceramics are attacked at high temperatures, >1000^{o}C, in an oxidizing atmosphere. This leads to a formation of cavities and a weakening of the ceramics in the surface zone which then can initiate fracture. Also in the use as cutting tools for cutting of steel and other iron-rich alloys a similar attack on SiC whiskers takes place, which leads to a deteriorated wear resistance. Also in other applications in corrosive environment, for example gaskets, similar negative effects have been observed. The somewhat unexpected conclusion is that SiC in whisker form has a great sensivity to chemical attacks in such composites in spite of the fact that pure silicon carbide is usually considered to be chemically much inert.

Also other whisker materials such as Si₃N₄, TiN, TiC, TiB₂, B₄C etc which are considered to give ceramics a high mechanical strength and excellent high temperature properties have been found to give similar unexpected negative effects.

Quite unexpected, it has now appeared that a whisker reinforeced ceramic sintered body having a very thin, <20µm, and dense surface layer of wear resistant material in which the whiskers themselves in said body are also coated with a very thin coating, have a favourable effect and counteract the observed disastrous surface attacks. Thereby the excellent inherent properties of the whisker reinforced materials have been better utilized. Thus, there have been tested thin Al₂O₃-layers or combinations of multiple layers where Al₂O₃_{,} TiN, TiC etc. have been alternately applied on the ceramics. Also other known, wear resistant layers and layer combinations can be used.

The coating methods which have been used are those commonly present, such as CVD, PVD etc. which give layers with thicknesses from 0.1 µm up to some ten µm.

The invention particularly relates to ceramic sintered bodies in which the ceramic matrix essentially consists of ceramic oxides or of ceramic oxides mixed with one or more hard carbides and/or nitrides and/or borides and/or binder metal, preferably of Al₂O₃_{,} ZrO₂ or partly stabilized ZrO₂. The whisker material shall be TiN, TiC, B₄C, Al₂O₃, ZrO₂, preferably SiC or Si₃N₄ or mixtures thereof. The outermost layer is suitably a layer of Al₂O₃ being 0.5-20 µm, usually 1-10 µm and preferably 2-5 µm thick.

Coating of layers thicker than some ten µm by CVD or PVD is normally not practically possible because of the low coating rate. It has been found, however, that essentially thicker layers in the form of densely sintered laminates can give positive effects if the ceramic material in the outer laminate does not have a thermal expansion which considerably deviates from that of the substrate and does not contain whiskers. Thus, for example pure Al₂O₃ or Al₂O₃ alloyed with small additions of other hard matters has given very positive results when the substrate has essentially been consisting of Al₂O₃ reinforced by whiskers. In a ceramic cutting tool for example it is sufficient if the laminate covers that surface which can be exposed to chemical influence.

In oxide ceramics, in which there are great amounts of ZrO₂ or other oxygen conducting materials, the above mentioned thin surface layers are not sufficient. In this latter case it has been found, however, that if the whisker is separately, before the powder mixing, coated with a very thin coating, up to 0.1 µm, of a chemically more resistant material than the whisker material, it is possible to reach such positive properties as if the whole whisker was of said more resistant material. Methods which can be mentioned are conventional coating methods such as CVD and PVD. Thin surface coatings can, however, also be applied by other chemical deposition methods for example by hydrolysis of metalorganic compounds upon whisker materials. Precipitation of Al₂O₃ on SiC or Si₃N₄ whiskers from aluminium propoxide is such an example.

In certain cases it has also been noted that such a pretreatment has changed the binding between the ceramic matrix and the whisker in such a positive direction that further improved mechanical properties such as fracture toughness have also been obtained.

An alternative way of protecting the above mentioned "oxygen conducting" material is that a ceramic densely sintered laminate layer completely covers the ceramic body.

## Claims

1. Whisker reinforced ceramic sintered body comprising a ceramic matrix reinforced with a reinforcing amount of ceramic whiskers, said body having at least one surface coated with one or more dense, wear resistant surface layers with a total thickness of up to 20 µm, wherein the ceramic matrix comprises, as a main component, either a ceramic oxide or a mixture of a ceramic oxide with at least one member from the group of hard carbides, nitrides, and borides, and wherein the ceramic whiskers are selected from the group consisting of TiN, TiC, B₄C, Al₂O₃, ZrO₂, SiC, Si₃N₄ or mixtures thereof, **characterized** in that the whiskers by means of pretreatment have obtained a thin, at the most 0.1 µm thick, surface coating of a chemically more resistant material than the whisker material.

2. Sintered body according to claim 1, **characterized** in that the body also contains an effective reinforcing amount of plate- or disc-shaped single crystal ceramic reinforcements.

3. Sintered body according to any of the preceding claims, **characterized** in that the outermost coating layer is a 0.05 - 20 µm thick layer of Al₂O₃.

## Revendications

1. Corps céramique fritté, comportant une armature de renforcement par des barbes ou trichites , ce corps comprenant une matrice céramique renforcée par une quantité renforçante de trichites céramiques, ledit corps ayant au moins une surface revêtue par une ou plusieurs couches superficielles denses, résistant bien à l'usure, ayant une épaisseur totale allant jusqu'à 20 micromètres, la matière céramique comprenant, comme constituant principal, un oxyde céramique ou un mélange d'un oxyde céramique avec au moins un membre du groupe constitué par des carbures, nitrures et boruresdurs , et les trichites céramiques étant choisis dans le groupe consistant en TiN, TiC, B₄C, Al₂O₃, ZrO₂, SiC, Si₃N₄ ou leurs mélanges, corps caractérisé en ce qu'à l'aide d'un prétraitement, les barbes ou trichites ont obtenu un revêtement superficiel mince, ayant une épaisseur maximale de 0,1 micromètre, en une matière chimiquement plus résistante que la matière constituant les trichites .

2. Corps fritté selon la revendication 1, caractérisé en ce que le corps contient également une quantité, efficace pour un renforcement, de matières céramiques de renforcement constitué par des monocristaux en forme de plaques ou de disques.

3. Corps fritté selon l'une quelconque des revendications précédentes, caractérisé en ce que le revêtement le plus externe est une couche de Al₂0₃ épaisse de 0,05 à 20 micromètres.

## Patentansprüche

1. Mit Whisker verstärkter keramischer Sinterkörper mit einer mit einer vertärkenden Menge keramischer Whisker verstärkten keramischen Matrix, wobei der Körper wenigstens eine mit einer oder mehreren dichten, verschleißfesten Oberflächenschichten mit einer Gesamtdicke von bis zu 20 µm überzogene Oberfläche besitzt und wobei die keramische Matrix als eine Hauptkomponente entweder ein keramisches Oxid oder ein Gemisch eines keramischen Oxids mit wenigstens einem Stoff aus der Gruppe harter Carbide, Nitride und Boride umfaßt und worin die keramischen Whisker aus der Gruppe TiN, TiC, B₄C, Al₂O₃, ZrO₂, SiC, Si₃N₄ und der Gemische derselben ausgewählt sind, **dadurch gekennzeichnet,** daß die Whisker durch Vorbehandlung einen dünnen, höchstens 0,1 µm dicken Oberflächenüberzug eines chemisch resistenteren Materials als das Whiskermaterial erhalten haben.

2. Sinterkörper nach Anspruch 1, **dadurch gekennzeichnet,** daß der Körper auch eine wirksame verstärkende Menge platten- oder scheibenförmiger keramischer Einkristallverstärkungen enthält.

3. Sinterkörper nach einem der vorausgehenden Ansprüche, **dadurch gekennzeichnet,** daß die äußerste Überzugsschicht eine 0,05 bis 20 µm dicke Schicht von Al₂O₃ ist.
